# EUROPÄISCHE PATENTSCHRIFT

(11) **EP 1 673 250 B1**
(45) Veröffentlichungstag und Bekanntmachung des Hinweises auf die Patenterteilung: **11.04.2007**
(21) Anmeldenummer: 05786306.0
(22) Anmeldetag: 10.08.2005
(51) Int. Cl.: B60J 7/14

(54) **KLAPPVERDECK FÜR EIN FAHRZEUG**
FOLDING TOP FOR A VEHICLE
TOIT ESCAMOTABLE DESTINE A UN VEHICULE

(30) Priorität: 20.08.2004 DE 10440728
(43) Veröffentlichungstag der Anmeldung: 28.06.2006
(73) Patentinhaber: CTS Fahrzeug-Dachsysteme GmbH, 74321 Bietigheim-Bissingen (DE)
(72) Erfinder: PAPENDORF, Marcus, 74354 Besigheim (DE); BRUDER, Gernot, 76131 Karlsruhe (DE); RÖDER, Holger, 73054 Eislingen (DE)
(74) Vertreter: Müller, Gottfried
(86) Internationale Anmeldenummer: PCT/EP2005/008688
(87) Internationale Veröffentlichungsnummer: WO 2006/021325

(56) Entgegenhaltungen:
- WO-A-20/04037585
- DE-A1- 10 108 493
- DE-A1- 10 158 938
- DE-C1- 10 021 340

## Beschreibung

Die Erfindung bezieht sich auf ein Klappverdeck für ein Fahrzeug gemäß dem Oberbegriff des Anspruches 1.

In der Druckschrift DE 101 08 493 A1 wird ein mehrteiliges Hardtop-Fahrzeugdach beschrieben, welches zwischen einer den Fahrzeuginnenraum überdeckenden Schließposition und einer Ablageposition zu verstellen ist, in der die Dachteile des Hardtops in einem heckseitigen Stauraum abgelegt sind. Das Fahrzeugdach ist über eine Viergelenkkinematik an die Fahrzeugkarosserie gekoppelt. Ein Hauptlenker der Viergelenkkinematik ist über eine zusätzliche Kreuzgelenkkinematik, welche die Funktion eines vorgeschalteten Vorgeleges hat, zu verstellen. Über die Kreuzgelenkkinematik wird der Hauptlenker zum Anheben aus jeder Endposition des Daches mit einem günstigen Hebelverhältnis beaufschlagt, wodurch die für das Anheben aus der jeweiligen Endposition erforderlichen Kräfte reduziert werden können. Die Kreuzgelenkkinematik wird mithilfe eines geeigneten Stellgliedes, beispielsweise eines Hydraulikzylinders verstellt.

Weitergehende Funktionen sind mit der Kreuzgelenkkinematik bzw. der Dachkinematik nicht zu realisieren. Insbesondere in Schließposition ist es aber wünschenswert, dass das Fahrzeugdach fest verriegelt ist, um ein unbeabsichtigtes Anheben zu verhindern. Ein Anheben des Daches kann bei nicht verriegelten Fahrzeugdächern bei höheren Fahrzeuggeschwindigkeiten aufgrund des auf der Dachaußenseite entstehenden Unterdruckes erfolgen. Zur Vermeidung des Anhebens werden üblicherweise die Dachteile des Fahrzeugdaches untereinander sowie das vordere Dachteil am Windschutzscheibenrahmen verriegelt. Derartige Verriegelungseinrichtungen erfordern aber einen nicht unerheblichen konstruktiven Aufwand.

In WO2004/037585 wird ein weiteres ähnliches Fahrzeugdach beschrieben.

Der Erfindung liegt das Problem zugrunde, mit einfachen konstruktiven Maßnahmen ein gattungsgemäßes Klappverdeck in verbesserter Weise kraft- und/oder geschwindigkeitsoptimiert aus einer Endposition anzuheben bzw. in eine Endposition abzulegen. In einer bevorzugten Ausführung soll das Klappverdeck in zumindest einer Endposition sicher zu verriegeln sein.

Dieses Problem wird erfindungsgemäß mit den Merkmalen des Anspruches 1 gelöst. Die Unteransprüche geben zweckmäßige Weiterbildungen an.

Das erfindungsgemäße Klappverdeck ist über eine Dachkinematik an die Fahrzeugkarosserie gekoppelt und kann zwischen zwei Endpositionen verstellt werden, wobei eine Endposition der Schließposition und die zweite Endposition der Ablageposition entspricht. Zusätzlich zur Dachkinematik ist eine Vorgelegekinematik vorgesehen, welche zwischen der Dachkinematik bzw. einem Teil der Dachkinematik und der Fahrzeugkarosserie angeordnet ist und welche die Dachkinematik zur Überführung des Klappverdecks zwischen den Endpositionen beaufschlagt. Diese Vorgelegekinematik ist über ein Stellglied zu betätigen, beispielsweise über einen hydraulischen Stellzylinder.

Die Vorgelegekinematik umfasst einen Kipphebel, welcher von dem Stellglied beaufschlagt wird, sowie einen gelenkig mit dem Kipphebel verbundenen Antriebshebel. Der Antriebshebel ist auf der dem Kipphebel abgewandten Seite über ein Gelenk mit einem Hauptlenker der Dachkinematik gekoppelt, wobei in zumindest einer Endposition des Klappverdecks, gegebenenfalls auch in beiden Endpositionen des Klappverdecks, der Antriebshebel und der Kipphebel zumindest annähernd in einer Strecklage zueinander stehen. In dieser Position nehmen die Längsachsen des Antriebshebels und des mit dem Antriebshebel gelenkig gekoppelten Armes des Kipphebels maximal einen kleinen Winkel ein, wodurch die zumindest annähernde Strecklage erreicht wird. Vorteilhaft wird die Strecklage exakt erreicht, es kommen aber auch Ausführungen mit einem Winkel kleiner als 20° in Frage, insbesondere kleiner als 10°, wobei auch Zwischenwinkellagen zwischen 10° und 20° sowie zwischen 0° und 10° in Betracht kommen.

Diese Strecklage zwischen dem Antriebshebel und dem einen Arm des Kipphebels bietet den Vorteil, dass eine große Kraftübersetzung bei gleichzeitig minimaler Bewegungsgeschwindigkeit beim Anheben des Daches aus der Endposition erreicht werden kann. Das auf den Kipphebel wirkende und von dem Stellglied erzeugte Moment wird im Kopplungspunkt zwischen dem einen Arm des Kipphebels und dem Antriebshebel in eine auf letzteren wirkende Kraft umgesetzt, welche aufgrund der Strecklage zwischen diesen beiden Bauteilen in eine hohe auf den Hauptlenker wirkende Kraft übersetzt wird, die mit Abstand zum Lagerpunkt des Hauptlenkers auf diesen wirkt. Hierdurch wird eine Kraftverstärkung und ein entsprechend hohes auf den Hauptlenker wirkendes Anhebemoment erreicht. Zu Beginn der Anhebebewegung, in der sich Kipphebel und Antriebshebel zumindest annähernd in Strecklage befinden, übt der Kipphebel eine Kraft auf den Antriebshebel aus, welche im gemeinsamen Kopplungsgelenk zumindest annähernd senkrecht zur Längsachse des Antriebshebels gerichtet ist. In Längsrichtung des Antriebshebels wird hierdurch eine hohe Kraft erzeugt, welche in ein hohes, den Hauptlenker um dessen Drehlager anhebendes Moment umgesetzt wird.

Der Kipphebel führt eine Drehbewegung und/oder eine translatorische Bewegung aus. Zweckmäßig ist der Kipphebel ausschließlich über Hebel- und/oder Stellglieder an der Fahrzeugkarosserie gehalten und besitzt kein karosserieseitiges Drehgelenk. Die Führung des Kipphebels kann hierbei über einen Stützhebel erfolgen, der beispielsweise einenends über ein Gelenk mit dem Hauptlenker der Dachkinematik und anderenends über ein weiteres Gelenk mit dem Kipphebel gekoppelt ist. Bei der Stellbeaufschlagung des Kipphebels über das Stellglied übt der Kipphebel zusätzlich zu seiner Rotation auch noch eine translatorische Bewegung aus. Diese translatorische Bewegung kann gegebenenfalls gegenüber der Rotation dominant sein.

Gemäß einer alternativen Ausführung kann es aber auch zweckmäßig sein, den Kipphebel über ein karosseriefestes Drehgelenk zu lagern.

In einer bevorzugten Ausführung ist vorgesehen, dass die Vorgelegekinematik in mindestens einer Endposition des Klappverdecks, bevorzugt in der Schließposition, in einer Verriegelungslage steht, in welcher das Klappverdeck verriegelt und eine Bewegung des Klappverdecks, beispielsweise hervorgerufen durch auf der Außenseite des Daches wirkenden Kräften, in zumindest einer Richtung blockiert ist. Unbeabsichtigte Bewegungen des Klappverdecks können dadurch verhindert werden. Die Verriegelungslage stellt sicher, dass das Klappverdeck durch die Einwirkung äußerer Kräfte nicht versehentlich aus der betreffenden Endposition angehoben werden kann. Ein Anheben ist vielmehr nur bei einer Betätigung des Stellgliedes möglich, welches auf die Vorgelegekinematik einwirkt und in der Lage ist, die Verriegelungslage zu lösen bzw. aufzuheben.

Mit dieser Ausführung wird eine sichere Arretierung des Klappverdecks in der zumindest einen Endposition erreicht, wobei prinzipiell keine zusätzlichen Blockiermaßnahmen bzw. Verriegelungseinrichtungen erforderlich sind. Da die Blockierung über die Vorgelegekinematik erfolgt, welche zur Verstellung des Daches von dem Stellglied beaufschlagt wird, wird eine funktionelle Trennung von Dachkinematik und Verriegelungseinrichtung erreicht, so dass konventionelle Dachkinematiken ohne Modifikationsaufwand verwendet werden können.

Ein weiterer Vorteil ist darin zu sehen, dass die Verriegelungslage in der Vorgelegekinematik mit verhältnismäßig einfachen Maßnahmen einzustellen ist. Grundsätzlich reicht es aus, dass die Vorgelegekinematik in eine Verstellrichtung blockiert wird, beispielsweise durch einen Anschlag, und dass die auf das Dach wirkenden Kräfte ein resultierendes Moment auf die Vorgelegekinematik erzeugen, das bestrebt ist, die Vorgelegekinematik in Richtung auf den Anschlag zu verstellen. In einer vorteilhaften Ausführung wird dies dadurch erreicht, dass das die Vorgelegekinematik beaufschlagende Stellglied in Verriegelungsposition der Vorgelegekinematik in einer Anschlagsposition steht. Über diese Anschlagsposition des Stellglieds hinaus ist eine Verstellung nicht möglich; andererseits kann die Verriegelungsposition über eine Betätigung des Stellglieds in Gegenrichtung verlassen werden, bei der ein Stellzylinder des Stellglieds oder dergleichen aus der Anschlagposition zurück verfahren wird.

Gemäß einer alternativen Ausführung nehmen zwei Hebel bzw. Lenker der Vorgelegekinematik, welche Teil der kinematischen Übertragungskette zwischen Stellglied und Dachkinematik und über ein Gelenk gekoppelt sind, in der zumindest einen Endposition des Fahrzeugdaches eine Übertotpunktlage ein, die aber zweckmäßig durch einen Anschlag begrenzt ist, der beispielsweise durch einen oder mehrere Lenker gebildet werden kann. Über eine Betätigung des Stellgliedes werden die beiden Hebel bzw. Lenker aus dieser Übertotpunktlage wieder in ihre Funktionslage überführt, in welcher die gesamte Kinematik und damit auch das Fahrzeugdach bewegt werden kann.

Zur Kopplung überzähliger Bewegungsfreiheitsgrade können der Vorgelegekinematik bewegungseinschränkende Bauteile zugeordnet sein, so dass bei einer Betätigung des Stellgliedes der Kipphebel und der Antriebshebel eine kinematisch eindeutig festgelegte Bewegung ausüben. Bei diesen die Bewegung einschränkenden Bauteilen handelt es sich beispielsweise um Führungen, Anschläge oder aber, gemäß einer bevorzugten Ausführung, um einen zusätzlichen Stützhebel, welcher insbesondere zwischen der Dachkinematik und einem Lenker bzw. Hebel der Vorgelegekinematik angeordnet ist. Zweckmäßig ist der Stützhebel gelenkig mit dem Hauptlenker der Dachkinematik einerseits sowie gelenkig mit dem Kipphebel der Vorgelegekinematik andererseits gekoppelt. Der Kipphebel ist vorteilhaft nicht direkt an der Fahrzeugkarosserie gelagert, sondern ausschließlich über Hebel und Lenker der Vorgelegekinematik geführt, insbesondere über den karosserieseitig gelagerten Stützhebel, der dem Kipphebel eine Bewegungsbahn aufprägt.

Der Kipphebel ist vorteilhaft als Dreieckslenker ausgeführt, wobei im Bereich der beiden Stirnseiten des Kipphebels jeweils ein Drehgelenk zur Kopplung mit dem Antriebshebel bzw. mit dem Stellglied und in der Mitte ein weiteres Gelenk zur schwenkbaren Kopplung mit dem Stützhebel angeordnet ist. Aufgrund der Position des Stützhebels zwischen einem Bauteil der Vorgelegekinematik und der Dachkinematik ergibt sich eine kompakte Bauform. Außerdem kann der Stützhebel zur Bewegungsunterstützung herangezogen werden, was insbesondere dadurch erreicht wird, dass der Stützhebel mit Abstand zum Drehgelenk des Hauptlenkers an der Fahrzeugkarosserie am Hauptlenker angreift, insbesondere an einem seitlichen Fortsatz des Hauptlenkers, wodurch sich ein Hebelarm in Bezug auf das karosserieseitige Drehgelenk des Hauptlenkers ergibt. Während der Dachbewegung kann die Wirklinie des Stützhebels, also die Verbindungslinie zwischen den beiden Drehgelenken des Stützhebels, die Achse des karosserieseitigen Drehgelenks des Hauptlenkers schneiden bzw. überfahren. Dadurch wird die Stützkraft im Bereich der beiden Endlagen des Daches zusätzlich zur Unterstützung der Drehbewegung ausgenutzt, wodurch auch die Gelenkbelastungen minimiert werden.

Gemäß einer alternativen Ausführung kann aber auch das Gelenk zwischen Stützhebel und Hauptlenker der Dachkinematik mit dem karosserieseitigen Drehgelenk des Hauptlenkers zusammenfallen. Eine zusätzliche Bewegungsunterstützung ist in diesem Falle zwar nicht gegeben; gleichwohl übernimmt der Stützhebel seine Führungsfunktion für den Kipphebel, außerdem wird eine klein bauende Ausführung erreicht.

Des Weiteren kann ein drehbar mit der Fahrzeugkarosserie verbundener Führungslenker vorgesehen sein, welcher ebenfalls der Vorgelegekinematik zuzuordnen ist und der eine Führung des Stellgliedes bewirkt. Der Führungslenker ist auf seiner dem karosserieseitigen Drehgelenk abgewandten Seite vorteilhaft gelenkig mit dem Stellzylinder des Stellgliedes gekoppelt, wodurch sichergestellt ist, dass der Stellzylinder beim Einfahren und Ausfahren ebenfalls eine kinematisch eindeutig festgelegte Bewegung ausführt.

Alternativ zu einem Führungslenker kann es aber auch vorteilhaft sein, die Führung des Stellzylinders beispielsweise über karosserieseitige Führungen bzw. Anschläge oder sonstige Maßnahmen zu erreichen.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer Dachkinematik und einer von einem hydraulischen Stellzylinder beaufschlagten Vorgelegekinematik, welche zur Verstellung der Dachkinematik dient, wobei die Dachkinematik Träger eines Klappverdeckes ist, dargestellt in Schließposition des Verdeckes, in der die Vorgelegekinematik in einer Verriegelungslage steht,
- Fig. 2: in stark schematisierter Darstellung die Kinematik aus Fig. 1, ebenfalls dargestellt in Verriegelungslage, welche der Schließposition des Fahrzeugverdecks zugeordnet ist,
- Fig. 3: die Kinematik zu Beginn der Überführung von Schließin Öffnungs- bzw. Ablageposition,
- Fig. 4: die Kinematik in einer weiter fortgeschrittenen Position beim Ablegen des Verdecks,
- Fig. 5: die Kinematik in ihrer zweiten Endposition, welche der Ablage- bzw. Öffnungsposition des Klappverdeckes entspricht,
- Fig. 6: eine Fig. 1 entsprechende Darstellung, jedoch in einer modifizierteKAusführung der Kinematik.

In den Figuren sind gleiche Bauteile mit gleichen Bezugszeichen versehen.

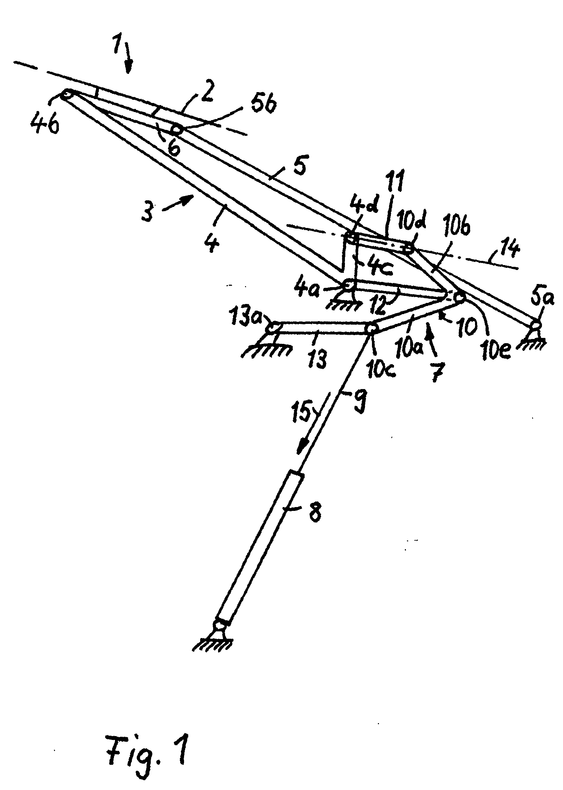

Bei dem Klappverdeck 1 gemäß Fig. 1 handelt es sich um ein Hardtop oder um ein Softtop, welches zwischen der in Fig. 1 dargestellten Schließposition, in welcher ein Fahrzeuginnenraum überdeckt ist, und einer Ablage- bzw. Öffnungsposition zu verstellen ist, in welcher das Klappverdeck in einem heckseitigen Stauraum abgelegt ist. Dargestellt ist von dem Klappverdeck 1 ein Dachteil 2, welches über eine Dachkinematik 3 verstellbar an der Fahrzeugkarosserie gehalten und zwischen den Endpositionen zu verstellen ist. Die Dachkinematik 3 umfasst einen Hauptlenker 4, welcher über ein Drehgelenk 4a karosserieseitig angeschlagen ist, sowie einen Zusatzlenker 5, welcher über ein weiteres Drehgelenk 5a ebenfalls karosseriefest angelenkt ist, und einen die beiden Lenker 4 und 5 verbindenden Verbindungslenker 6, welcher über Gelenke 4b und 5b drehbar mit dem Hauptlenker 4 bzw. dem Zusatzlenker 5 gekoppelt ist. Die Lenker 4, 5 und 6 bilden eine Viergelenkkinematik.

Des Weiteren ist eine Vorgelegekinematik 7 vorgesehen, welche von einem hydraulischen Stellglied 8 mit einem Stellzylinder 9 beaufschlagt wird. Die Vorgelegekinematik 7 ist der Dachkinematik 3 vorgeschaltet und ist mit dieser kinematisch gekoppelt, derart, dass bei einer vom Stellglied 8 erzeugten Stellbewegung der Vorgelegekinematik auch die Dachkinematik 3 verstellt wird. Die Vorgelegekinematik 7 umfasst einen dreieckförmigen Kipphebel 10 mit winklig zueinander angeordneten Armen 10a und 10b. Des Weiteren ist der Vorgelegekinematik 7 ein Antriebshebel 11, ein Stützhebel 12 sowie ein Führungslenker 13 zugeordnet.

Der Kipphebel 10 ist über ein Gelenk 10c an einem Arm 10a gelenkig mit dem Stellzylinder 9 des Stellgliedes 8 verbunden. Im Bereich der gegenüberliegenden Stirnseite ist der Kipphebel 10 an seinem zweiten Arm 10b über ein weiteres Gelenk 10d schwenkbar mit dem Antriebshebel 11 gekoppelt, der wiederum auf seiner gegenüberliegenden Seite über ein Gelenk 4d schwenkbar mit einem einteilig mit dem Hauptlenker 4 ausgebildeten Fortsatz 4c verbunden ist. Der Fortsatz-4c erstreckt sich ausgehend von dem karosserieseitigen Drehgelenk 4a in einem Winkel zum Hauptlenker 4, wobei die Achse des Drehgelenkes 4d auf Abstand zur Achse des Drehgelenkes 4a liegt; dieser Abstand stellt den Hebelarm für die Einleitung der Drehbewegung der Dachkinematik 3 dar.

Im mittleren Bereich des Kipphebels 10 befindet sich ein weiteres Gelenk 10e, über das der Kipphebel 10 schwenkbar mit dem Stützhebel 12 verbunden ist, der anderenends gelenkig mit dem Hauptlenker 4 verbunden ist. Zweckmäßig ist der Stützhebel 12 auch über das karosserieseitige Drehgelenk 4a mit dem Hauptlenker 4 verbunden. Der Stützhebel 12 bewirkt eine Stabilisierung und Führung der Vorgelegekinematik und bindet überzählige Bewegungsfreiheitsgrade.

Der Führungslenker 13 ist über ein karosserieseitiges Drehgelenk 13a an der Fahrzeugkarosserie schwenkbar abgestützt und auf seiner gegenüberliegenden Seite über das Gelenk 10c schwenkbar mit dem Arm 10a des Kipphebels 10 verbunden. Am Gelenk 10c greift auch der Stellzylinder des Stellgliedes 8 an. Der Führungslenker 13 bewirkt dadurch eine Führung des Stellzylinders 9.

In der in Fig. 1 gezeigten Schließstellung befinden sich Kipphebel 10 und Antriebshebel 11 in einer Übertotpunktlage, in welcher eine Wirklinie 14 durch die Gelenke 4d und 10d des Antriebshebels 11 oberhalb des Gelenkes 10e zwischen dem Kipphebel und dem Stützhebel 12 verläuft. Bei einer auf das Fahrzeugdach wirkenden Kraft, welche bestrebt ist, das Fahrzeugdach 1 anzuheben, wird die Dachkinematik 3 um das karosserieseitige Drehgelenk 4a des Hauptlenkers 4 im Uhrzeigersinn beaufschlagt. Diese Aufschwenkbewegung ist jedoch dadurch blockiert, dass der Antriebshebel 11 aufgrund seiner oberhalb des Gelenks 10e verlaufenden Wirklinie 14 bestrebt ist, den Kipphebel 10 um sein Gelenk 10e im Uhrzeigersinn zu verstellen, was jedoch von dem in Schließstellung des Daches voll ausgefahrenen Stellzylinder 9 des Stellgliedes 8 verhindert wird. Zwar erzeugt die Aufschwenkbewegung des Daches über den Führungslenker 13 und das Gelenk 10c ein entgegengesetztes, im Gegenuhrzeigersinn drehendes Moment um das Gelenk 10e des Kipphebels 10, da der Führungslenker 13 oberhalb der Wirklinie des unteren Arms 10a des Kipphebels 10 verläuft; dieses im Gegenuhrzeigersinn drehende Moment ist aber bei geeigneter Wahl der Kinematikpunkte und Wirkabstände kleiner als das im Uhrzeigersinn drehende Moment, welches über den Antriebshebel 11 eingeleitet wird und um das Gelenk 10e wirkt. Da das resultierende Moment im Uhrzeigersinn wirkt, ist auch der Kipphebel bestrebt, eine Schwenkbewegung um sein Gelenk 10e im Uhrzeigersinn durchzuführen, was aber von dem ausgefahrenen, in der Anschlagposition befindlichen Stellglied 8 verhindert wird. Die Vorgelegekinematik 7 steht somit in Verriegelungsposition, die ein unerwünschtes Anheben des Fahrzeugdaches sicher verhindert.

Bei einer Betätigung des Stellgliedes 8, bei der der Stellzylinder 9 aus seiner in Fig. 1 voll ausgefahrenen Stellung gemäß Pfeilrichtung 15 eingefahren wird, um das Dach aus der Schließin die Öffnungsposition zu verstellen, wird zu Beginn der Öffnungsbewegung der Kipphebel 10 zunächst hauptsächlich um seinen Drehpunkt 10e, an welchem der Stützhebel 12 abgestützt ist, im Gegenuhrzeigersinn gekippt, wodurch der Kipphebel 10 und der Antriebshebel 11 aus ihrer Übertotpunktposition herausgehoben werden und die Vorgelegekinematik ihre Verriegelungsposition verlässt. Im Verlaufe dieser Bewegung wird der Antriebshebel 11 von dem Kipphebel 10 angezogen, wobei diese Zugkraft über die Kopplung des Antriebshebels 11 mit dem Fortsatz 4c des Hauptlenkers 4 in ein im Uhrzeigersinn wirkendes, die Dachkinematik 3 in die Öffnungsposition verstellendes Drehmoment um das karosserieseitige Drehgelenk 4a umgesetzt wird. Bei Erreichen der Strecklage - der Totpunktposition - von dem Arm 10b des Kipphebels 10 und dem Antriebshebel 11 wird eine große Kraftübersetzung bei gleichzeitig minimaler Bewegungsgeschwindigkeit in der Vorgelegekinematik erreicht, so dass das Fahrzeugdach aus seiner Endposition mit hoher Kraft angehoben wird, zugleich die Anhebegeschwindigkeit aber gering ist.

Zweckmäßig nimmt die Vorgelegekinematik in beiden Endpositionen eine Verriegelungslage ein. Die Vorgelegekinematik nimmt in zumindest einer Endstellung ihre Verriegelungslage durch Erreichen einer Übertotpunktlage, gegebenenfalls auch einer Totpunkt- bzw. Strecklage ein, wobei der für die Begrenzung der Übertotpunktlage erforderliche Anschlag auf den Kipphebel, den Antriebshebel, den Führungslenker oder den Hauptlenker wirken kann.

Das Gelenk 10e des Kipphebels 10 kann auch karosseriefest angebunden sein; in diesem Fall kann auf den Stützhebel 12 und den Führungslenker 13 verzichtet werden.

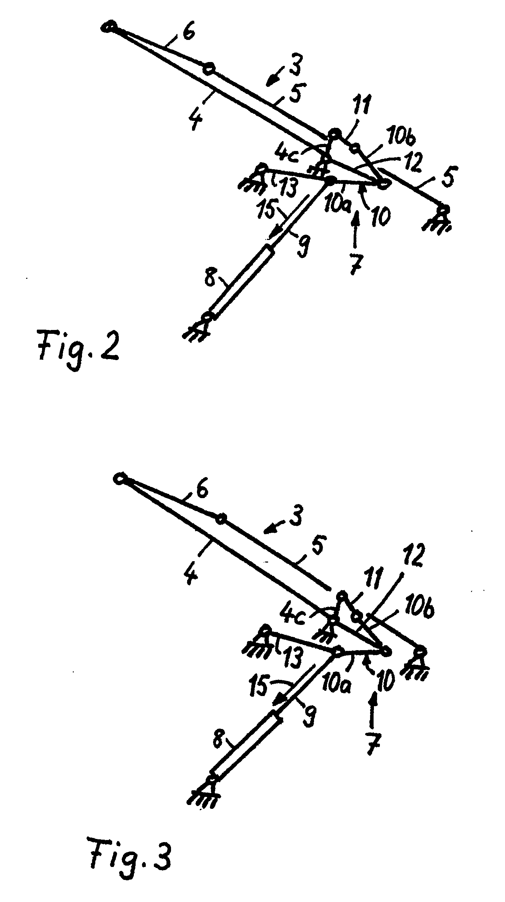

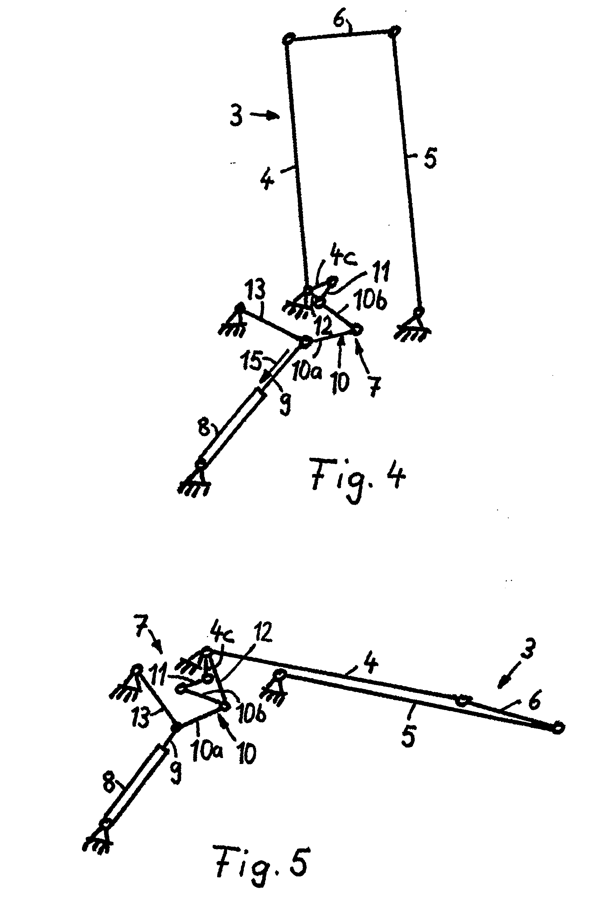

Im Folgenden wird auf die Fig. 2 bis 5 Bezug genommen, die verschiedene Positionen der Kinematik bei der Überführung von Schließstellung (Fig. 2) in die Öffnungsstellung (Fig. 5) darstellen.

Nachdem bei einem Einfahren des Stellzylinders 9 zu Beginn der Öffnungsbewegung die in Fig. 1 und auch in Fig. 2 dargestellte Übertotpunktlage verlassen worden ist und die in Fig. 3 dargestellte Strecklage erreicht worden ist, wird im weiteren Verlauf der Stellbewegung aus der anfänglichen Kippbewegung des Kipphebels 10 eine nahezu lineare Führungsbewegung des Antriebshebels 11 erreicht, da der Rotation um die Kippachse des Kipphebels um sein Gelenk 10e die Bewegungen des Stützhebels 12 und des Führungslenkers 13 überlagert sind. Die Gelenkpunkte werden zweckmäßig in der Weise gewählt, dass der um das karosserieseitige Drehgelenk 4a des Hauptlenkers 4 wirksame Hebelarm (Fortsatz 4c) des Antriebshebels 11 in einer fortgeschrittenen Bewegungsphase bei der Öffnungsbewegung des Daches in gleichem Maße wie das Lastmoment zunächst abnimmt und anschließend wieder zunimmt, so dass die Kraft nahezu konstant bleibt, wodurch auch die maximale Kraft minimiert wird. Auch der Stellzylinder 9 des Stellgliedes 8 behält in diesem fortgeschrittenen Bewegungsabschnitt, welcher in Fig. 4 dargestellt ist, im Wesentlichen seine annähernd rechtwinklige Relativposition zum Führungslenker 13 bei.

In der Öffnungs- bzw. Ablageposition, welche in Fig. 5 dargestellt ist, ist der Stellzylinder 9 des Stellgliedes 8 vollständig eingefahren. Der Antriebshebel 11 steht in einem annähernd rechten Winkel zum Fortsatz 4c am Hauptlenker 4. Diese Position ermöglicht analog zur gegenüberliegenden Endposition bei einem Ausfahren des Stellzylinders für die Überführung des Daches in Schließposition ein kraftwirksames Anheben des Fahrzeugdaches bei zugleich geringer Bewegungsgeschwindigkeit.

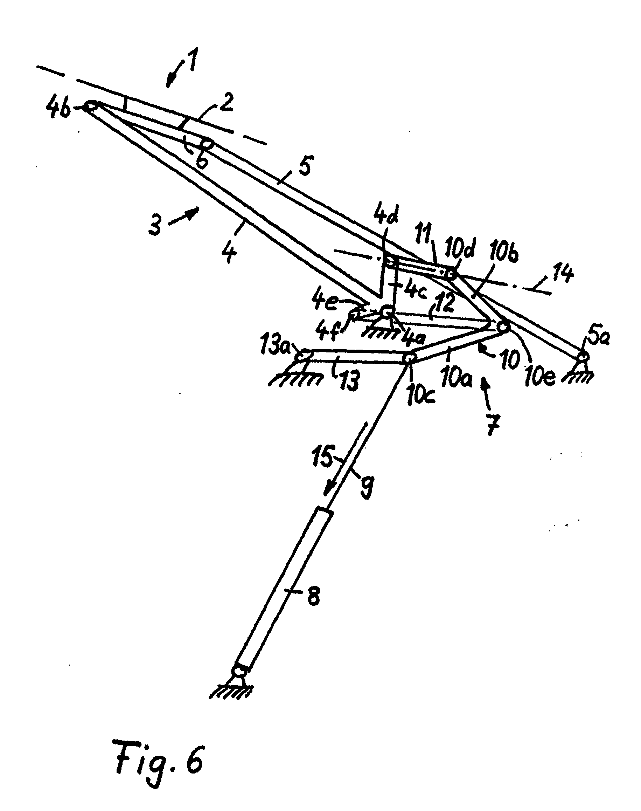

Fig. 6 zeigt eine Kinematik für ein Klappverdeck 1 in einer modifizierten Ausführung. Die Darstellung gemäß Fig. 6 entspricht im Wesentlichen derjenigen nach Fig. 1, so dass in Bezug auf übereinstimmende Bauteile und die Wirkungsweise auf die Beschreibung zu Fig. 1 verwiesen wird.

Im Unterschied zur Ausführung nach Fig. 1 ist gemäß Fig. 6 der Hauptlenker 4 mit einem zweiten Fortsatz 4e versehen, welcher sich auf der gegenüberliegenden Seite zum ersten Fortsatz 4d befindet. In den außen liegenden Abschnitt des Fortsatzes 4e ist ein Gelenk 4f angebracht, über das der Fortsatz 4e drehbar mit dem Stützhebel 12 verbunden ist. Der Gelenkpunkt zwischen Stützhebel 12 und Fortsatz 4e liegt somit mit Abstand zur Achse des karossserieseitigen Drehgelenkes 4a des Hauptlenkers 4. Während der Ablage- bzw. Öffnungsbewegung des Fahrzeugdaches wandert die Wirklinie des Stützhebels 12 - also die Verbindungslinie durch die beiden Gelenke 4f und 10e des Stützhebels 12 - über die Drehachse des karosserieseitigen Drehgelenks 4a des Hauptlenkers 4. In der Schließstellung gemäß Fig. 6 liegen die Wirklinien von Stützhebel 12 sowie von Antriebshebel 11 (Wirklinie 14) auf gegenüberliegenden Seiten des karosserieseitigen Drehgelenks 4a. Die über den Stützhebel 12 übertragene Stützkraft wird über das Gelenk 4f und den Fortsatz 4e auf den Hauptlenker 4 übertragen und bewirkt ein zusätzliches, unterstützendes Drehmoment um das karosserieseitige Drehgelenk 4a, welches in die gleiche Richtung wirkt wie das über den Antriebshebel 11 eingeleitete Drehmoment. Die Stützkraft des Stützhebels 12 wirkt somit unterstützend zur Öffnungskraft des Antriebshebels 11.

Da die Wirklinie des Stützhebels 12 das karosserieseitige Drehgelenk 4a im Laufe der Ablagebewegung überschreitet, befindet sich in Ablagestellung die Wirklinie des Stützhebels 12 auf der gleichen Seite des Drehgelenks 4a wie die Wirklinie 14 des Antriebshebels 11. Die Stützkraft des Stützhebels 12 kann somit auch beim Anheben des Fahrzeugdaches aus der Ablageposition heraus unterstützend zur Anhebekraft des Antriebshebels 11 wirken.

Ein weiterer Vorteil der über den Stützhebel übertragenen Stützkraft liegt in der Entlastung der übrigen Gelenke der Kinematik.

Die Vorgelegekinematik ist in der Weise ausgeführt, dass beim Annähern an jede der beiden Endlagen trotz einer gleich bleibenden Stellgeschwindigkeit des Stellgliedes die Bewegungsgeschwindigkeit der Kinematik immer weiter herabgesetzt wird. Gleiches gilt für die Anhebebewegung aus jeder der beiden Endlagen. Außerdem ist bei der reduzierten Annäherungs- bzw. Anhebegeschwindigkeit die jeweilige Anhebe- bzw. Bremskraft erhöht. Die maximale Bewegungsgeschwindigkeit der Kinematik und des Daches wird in einer mittleren Position zwischen den beiden Endlagen erreicht.

Die Verriegelung in Schließstellung des Daches wird wie beim vorhergehenden Ausführungsbeispiel durch ein Blockieren des Kipphebels 10 über das voll ausgefahrene Stellglied 8 erreicht. Da im Falle einer auf das Dach wirkenden Aufstellkraft, die bestrebt ist, das Dach aufzustellen, ein resultierendes Moment um das Gelenk 10e im Uhrzeigersinn erzeugt wird, jedoch eine Bewegung des Kipphebels 10 um dieses Gelenk 10e aufgrund der Kopplung mit dem Stellzylinder 9 des Stellglieds verhindert wird, befindet sich das Dach in Verriegelungsposition.

## Patentansprüche

1. Klappverdeck für ein Fahrzeug, wobei das Klappverdeck (1) über eine Dachkinematik (3) an die Fahrzeugkarosserie gekoppelt und zwischen zwei Endpositionen - einer einen Fahrzeugraum überdeckenden Schließposition und einer Ablageposition - zu verstellen ist, mit einer Vorgelegekinematik (7), die die Dachkinematik (3) zur Überführung des Klappverdecks (1) zwischen den Endpositionen beaufschlagt und die über ein Stellglied (8) betätigbar ist, wobei die Vorgelegekinematik (7) einen Kipphebel (10), welcher von dem Stellglied (8) beaufschlagt wird, und einen gelenkig mit dem Kipphebel (10) verbundenen Antriebshebel (11) umfasst, der auf der dem Kipphebel (10) abgewandten Seite über ein Gelenk (4d) mit einem Hauptlenker (4) der Dachkinematik (3) gekoppelt ist, und wobei in einer Endposition des Klappverdecks (1) der Antriebshebel (11) und der Kipphebel (10) zumindest annähernd in einer Strecklage zueinander stehen,
**dadurch gekennzeichnet,**
**dass** der Kipphebel (10) ausschließlich über Hebel und/oder Stellglieder ohne direktes karosserieseitiges Drehgelenk an der Fahrzeugkarosserie gehalten ist.

2. Klappverdeck nach Anspruch 1,
**dadurch gekennzeichnet,**
**dass** die Längsachsen des Antriebshebels (11) und des mit dem Antriebshebel (11) gelenkig gekoppelten Arms (10b) des Kipphebels (10) einen Winkel kleiner als 20° einschließen.

3. Klappverdeck nach Anspruch 2,
**dadurch gekennzeichnet,**
**dass** die Längsachsen des Antriebshebels (11) und des mit dem Antriebshebels (11) gelenkig gekoppelten Arms (10b) des Kipphebels (10) einen Winkel kleiner als 10° einschließen.

4. Klappverdeck nach einem der Ansprüche 1 bis 3,
**dadurch gekennzeichnet,**
**dass** ein Stützhebel (12) vorgesehen ist, der einenends über ein Gelenk (4a, 4f) mit dem Hauptlenker (4) der Dachkinematik (3) und anderenends über ein Gelenk (10e) mit dem Kipphebel (10) gekoppelt ist.

5. Klappverdeck nach Anspruch 4,
**dadurch gekennzeichnet,**
**dass** das Gelenk (10e) zwischen Stützhebel (12) und Kipphebel (10) zwischen den Gelenken (10c, 10d) des Kipphebels (10) liegt, über die der Kipphebel (10) mit dem Stellglied (8) bzw. dem Antriebshebel (11) gekoppelt ist.

6. Klappverdeck nach Anspruch 4 oder 5,
**dadurch gekennzeichnet,**
**dass** das Gelenk (4f) zwischen Stützhebel (12) und Hauptlenker (4) der Dachkinematik (3) an einem zweiten Hebelfortsatz (4e) des Hauptlenkers (4) mit Abstand zur Drehachse des karosserieseitigen Gelenks (4a) des Hauptlenkers (4) angeordnet ist.

7. Klappverdeck nach Anspruch 6,
**dadurch gekennzeichnet,**
**dass** die die beiden Gelenke (4f, 10e) des Stützhebels (12) verbindende Wirklinie (14) bei der Verstellung des Klappverdecks (1) zwischen den beiden Endpositionen die Drehachse des karosserieseitigen Gelenks (4a) des Hauptlenkers (4) schneidet.

8. Klappverdeck nach Anspruch 4 oder 5,
**dadurch gekennzeichnet,**
**dass** das Gelenk (4a) zwischen Stützhebel (12) und Hauptlenker (4) der Dachkinematik (3) mit dem karosserieseitigen Drehgelenk (4a) des Hauptlenkers (4) zusammenfällt.

9. Klappverdeck nach einem der Ansprüche 1 bis 8,
**dadurch gekennzeichnet,**
**dass** in mindestens einer Endposition in einer eine unbeabsichtigte Bewegung des Klappverdecks (1) blockierenden Verriegelungslage steht.

10. Klappverdeck nach Anspruch 9,
**dadurch gekennzeichnet,**
**dass** das Stellglied (8) in Verriegelungslage der Vorgelegekinematik (7) in einer Anschlagsposition steht.

11. Klappverdeck nach einem der Ansprüche 1 bis 10,
**dadurch gekennzeichnet,**
**dass** der Antriebshebel (11) an einem ersten Hebelfortsatz (4c) am Hauptlenker(4) angreift.

12. Klappverdeck nach einem der Ansprüche 1 bis 11,
**dadurch gekennzeichnet,**
**dass** ein Führungslenker (13) vorgesehen ist, der einenends über ein Gelenk (13a) mit der Fahrzeugkarosserie und anderenends über ein Gelenk (10c) mit dem Kipphebel (10) gekoppelt ist.

13. Klappverdeck nach einem der Ansprüche 1 bis 12,
**dadurch gekennzeichnet,**
**dass** die Dachkinematik (3) als Viergelenkkinematik ausgebildet ist.

## Claims

1. Folding top for a vehicle, the folding top (1) being coupled to the vehicle body via a roof kinematic system (3) and being able to be displaced between two end positions - a closed position covering a vehicle compartment and a put-away position-, with a transmission kinematic system (7), which acts upon the roof kinematic system (3) in order to transfer the folding top (1) between the end positions, and which can be actuated via an actuating element (8), the transmission kinematic system (7) comprising a tilting lever (10), which is acted upon by the actuating element (8), and a drive lever (11), which is connected to the tilting lever (10) in an articulated manner and, on the side facing away from the tilting lever (10), is coupled to a main link (4) of the roof kinematic system (3) via a joint (4d), and with, in an end position of the folding top (1), the drive lever (11) and the tilting lever (10) being at least approximately in an extension position in relation to each other, **characterized in that** the tilting lever (10) is held on the vehicle body exclusively via levers and/or actuating elements without a direct body-side rotary joint.

2. The folding top as claimed in Claim 1, **characterized in that** the longitudinal axes of the drive lever (11) and of the arm (10b) of the tilting lever (10), which arm is coupled to the drive lever (11) in an articulated manner, enclose an angle of less than 20°.

3. The folding top as claimed in Claim 2, **characterized in that** the longitudinal axes of the drive lever (11) and of the arm (10b) of the tilting lever (10), which arm is coupled to the drive lever (11) in an articulated manner, enclose an angle of less than 10°.

4. The folding top as claimed in one of Claims 1 to 3, **characterized in that** a supporting lever (12) is provided, which is coupled at one end to the main link (4) of the roof kinematic system (3) via a joint (4a, 4f) and is coupled at the other end to the tilting lever (10) via a joint (10e).

5. The folding top as claimed in Claim 4, **characterized in that** the joint (10e) between supporting lever (12) and tilting lever (10) is situated between the joints (10c, 10d) of the tilting lever (10), via which joints the tilting lever (10) is coupled to the actuating element (8) and to the drive lever (11).

6. The folding top as claimed in Claim 4 or 5, **characterized in that** the joint (4f) between supporting lever (12) and main link (4) of the roof kinematic system (3) is arranged on a second lever extension (4e) of the main link (4) at a distance from the axis of rotation of the body-side joint (4a) of the main link (4) .

7. The folding top as claimed in Claim 6, **characterized in that**, during the displacement of the folding top (1) between the two end positions, the effective line (14) connecting the two joints (4f, 10e) of the supporting lever (12) intersects the axis of rotation of the body-side joint (4a) of the main link (4).

8. The folding top as claimed in Claim 4 or 5, **characterized in that** the joint (4a) between supporting lever (12) and main link (4) of the roof kinematic system (3) coincides with the body-side rotary joint (4a) of the main link (4).

9. The folding top as claimed in one of Claims 1 to 8, **characterized in that**, in at least one end position, is in a locking position blocking an unintentional movement of the folding top (1).

10. The folding top as claimed in Claim 9, **characterized in that**, in the locking position of the transmission kinematic system (7), the actuating element (8) is in a stop position.

11. The folding top as claimed in one of Claims 1 to 10, **characterized in that** the drive lever (11) acts on a first lever extension (4c) on the main link (4).

12. The folding top as claimed in one of Claims 1 to 11, **characterized in that** a guide link (13) is provided, which is coupled at one end to the vehicle body via a joint (13a) and is coupled at the other end to the tilting lever (10) via a joint (10c).

13. The folding top as claimed in one of Claims 1 to 12, **characterized in that** the roof kinematic system (3) is designed as a four-bar kinematic system.

## Revendications

1. Capot rabattable pour véhicule, ce capot rabattable (1) étant couplé par une cinématique de toit (3) à la carrosserie du véhicule et se réglant entre deux positions extrêmes - une position de fermeture recouvrant l'habitacle du véhicule et une position de rangement - et comportant une cinématique de transmission (7) qui sollicite la cinématique de toit (3) pour permuter le capot rabattable (1) entre les positions extrêmes et qui est actionnable au moyen d'un élément de réglage (8), la cinématique de transmission (7) comprenant un levier basculant (10) qui est sollicité par l'élément de réglage (8) et un levier moteur (11) relié de manière articulée au levier basculant (10) et couplé, du coté détourné du levier basculant (10), par une articulation (4d) à une bielle principale (4) de la cinématique de toit (3) et, en position extrême du capot rabattable (1), le levier moteur (11) et le levier basculant (10) étant du moins approximativement en position d'extension l'un par rapport à l'autre, **caractérisé en ce que**
le levier basculant (10) est maintenu exclusivement sur la carrosserie du véhicule par des leviers et/ou des éléments de réglage sans joint à rotule direct placé du côté de la carrosserie.

2. Capot rabattable selon la revendication 1,
**caractérisé en ce que**
les axes longitudinaux du levier moteur (11) et du bras (10b) du levier basculant (10) couplé de manière articulée au levier moteur (11) circonscrivent un angle inférieur à 20°.

3. Capot rabattable selon la revendication 2,
**caractérisé en ce que**
les axes longitudinaux du levier moteur (11) et du bras (10b) du levier basculant (10) couplé de manière articulée au levier moteur (11) circonscrivent un angle inférieur à 10°.

4. Capot rabattable selon l'une quelconque des revendications 1 à 3,
**caractérisé en ce que**
il est prévu un levier support (12) qui est couplé à une extrémité par une articulation (4a, 4f) à la bielle principale (4) de la cinématique de toit (3) et à son autre extrémité par une articulation (10e) au levier basculant (10).

5. Capot rabattable selon la revendication 4,
**caractérisé en ce que**
l'articulation (10e) entre le levier support (12) et le levier basculant (10) se trouve entre les articulations (10c, 10d) du levier basculant (10) par lesquelles le levier basculant (10) est couplé à l'élément de réglage (8) ou au levier moteur (11).

6. Capot rabattable selon la revendication 4 ou 5,
**caractérisé en ce que**
l'articulation (4f) entre le levier support (12) et la bielle principale (4) de la cinématique de toit (3) est disposée au niveau d'une deuxième rallonge de levier (4e) de la bielle principale (4) à distance de l'axe de rotation de l'articulation placée du côté de la carrosserie (4a) de la bielle principale (4).

7. Capot rabattable selon la revendication 6,
**caractérisé en ce que**
la ligne d'action (14) reliant les deux articulations (4f, 10e) du levier support (12), lors du réglage du capot rabattable (1) entre les deux positions extrêmes, coupe l'axe de rotation de l'articulation placée du côté de la carrosserie (4a) de la bielle principale (4).

8. Capot rabattable selon la revendication 4 ou 5,
**caractérisé en ce que**
l'articulation (4a) entre le levier support (12) et la bielle principale (4) de la cinématique de toit (3) coïncide avec le joint à rotule placé du côté de la carrosserie (4a) de la bielle principale (4).

9. Capot rabattable selon l'une quelconque des revendications 1 à 8,
**caractérisé en ce que**,
dans au moins une position extrême, se trouve dans une position de verrouillage bloquant un mouvement inopiné du capot rabattable (1).

10. Capot rabattable selon la revendication 9,
**caractérisé en ce que**
l'élément de réglage (8), en position de verrouillage de la cinématique de transmission (7), se trouve en position de butée.

11. Capot rabattable selon l'une quelconque des revendications 1 à 10,
**caractérisé en ce que**
le levier moteur (11) s'engrène au niveau d'une première rallonge de levier (4c) sur la bielle principale (4).

12. Capot rabattable selon l'une quelconque des revendications 1 à 11,
**caractérisé en ce que**
il est prévu une bielle de guidage (13) qui est couplée à une extrémité par une articulation (13a) à la carrosserie du véhicule et à l'autre extrémité par une articulation (10c) au levier basculant (10).

13. Capot rabattable selon l'une quelconque des revendications 1 à 12,
**caractérisé en ce que**
la cinématique de toit (3) est réalisée sous forme d'une cinématique à quatre articulations.
